# EUROPEAN PATENT APPLICATION

(11) **EP 2 031 795 A1**
(43) Date of publication of application: **04.03.2009**
(21) Application number: 07016953.7
(22) Date of filing: 29.08.2007
(51) Int. Cl.: H04L 12/14, H04M 15/00

(54) **An improved mobile radio telecommunication network**

(71) Applicant: Nokia Siemens Networks Oy, 02610 Espoo (FI)
(72) Inventor: Natarajan, Totadhri, Jayanagar, 560082 Bangalore (IN)
(74) Representative: Weidel, Gottfried

(57) **Abstract**

A mobile radio telecommunication network includes a support node. The support node generates a message with a modify PDP context information element when triggered by a Request to Modify PDP context, to an Intelligent Network.

## Description

This invention relates to an improved mobile radio telecommunication network.

The specifications of GPRS (General Packet Radio Services) network are defined by the ETSI (European Telecommunication Standards Institute). The GPRS network provides packet radio access for GSM (Global System Mobile) mobile phone users. According to the GPRS system, radio resource is reserved only when there is something to send. Other mobile phone users within a cell share the same radio resource. This then provide for effective use of scarce radio resource. GPRS facilitates applications, such as interactive data access. Unlike circuit switched network, the GPRS network is able to offer connection to a standard data network.

US 6 636 502 discloses a switching device in a mobile radio communication system which supports GPRS network. The GPRS network allows connection to a terminal station of the mobile radio communication system with a plurality of packet-data communication networks.

US 6 920 499 discloses a resource reservation using unidirectional RSVP (resource reservation protocol) messages to set up a bi-directional PDP (packet data protocol) context.

It is an object to provide an improved mobile radio telecommunication network. This object is achieved by the subject matter of the independent claim. Further improvements are achieved by the subject matter of the dependent claims.

A method of charging a packet data service in a mobile radio telecommunication network comprises the step of receiving a request to modify a PDP (Packet Data Protocol) context by a support node, and sending a message with a modify PDP context information element by the support node to an Intelligent Network. The mobile radio telecommunication network comprises a packet-switched network with at least a support node, and an Intelligent Network.

The method provides flexibility to the Intelligent Network as the Intelligent Network is informed of any changes in the PDP context. This allows for charging that is based on the type of PDP activation or modification, such as PDP context activation, secondary PDP context activation or modify PDP context (modification of PDP context). An operator of the telecommunication network service is thus able to provide flexible service plans, which are aligned with the type of subscriber's PDP activation and with the operator's business plans. Furthermore, the method is easy to implement and requires minimal investment for most networks.

The mobile radio telecommunication network may be in the form of a Global System Mobile network whereas the packet-switched network can be in the form of a GPRS (General Packet Radio Services) network.

The support node can be in the form of a serving GPRS support node whereas the Intelligent Network may comprise a service control point. Furthermore, the support node may receive the request to modify the PDP context from the mobile station. The request to modify the PDP context may be is manually generated by a user of the mobile station or may be automatically generated by the mobile station. The message with a modify PDP context information element may be part of an Initial DP GPRS message or part of an Event Report GPRS message (Modify PDP context defined as Event type and included as a modification of GPRS Event type information element).

The modify PDP context information element can be part of a GPRS Event type. The GPRS event type may also be part of an Event Report GPRS message whilst the GPRS event type can also be part of a message.

The provision of the modify PDP context information element with the Initial DP GPRS message or with the Event Report GPRS message advantageously utilise the telecommunication network existing structure for transmitting the modify PDP context information to the service control point.

The method may comprise the further step of sending an Apply charging GPRS message from the service control point to the support node, and may include the further step of sending an Apply-charging report GPRS message from the support node to the service control point. The method may also include the further step of sending an Acceptance of modify PDP context request message from the support node to the mobile station.

A mobile radio telecommunication network comprises a support node, which generates a message with a modify PDP context information element when triggered by a Request to Modify PDP context and sends the message to an Intelligent Network.

The mobile radio telecommunication network may be in the form of a Global System Mobile network whilst the support node can be in the form of a serving GPRS support node.
- FIG. 1: illustrates a GSM (Global System for Mobile communications) Network,
- FIG. 2: illustrates an embodiment of a first method of charging in the GSM network 10 of FIG. 1, and
- FIG. 3: illustrates an embodiment of a second method of charging in the GSM network 10 of FIG. 1.

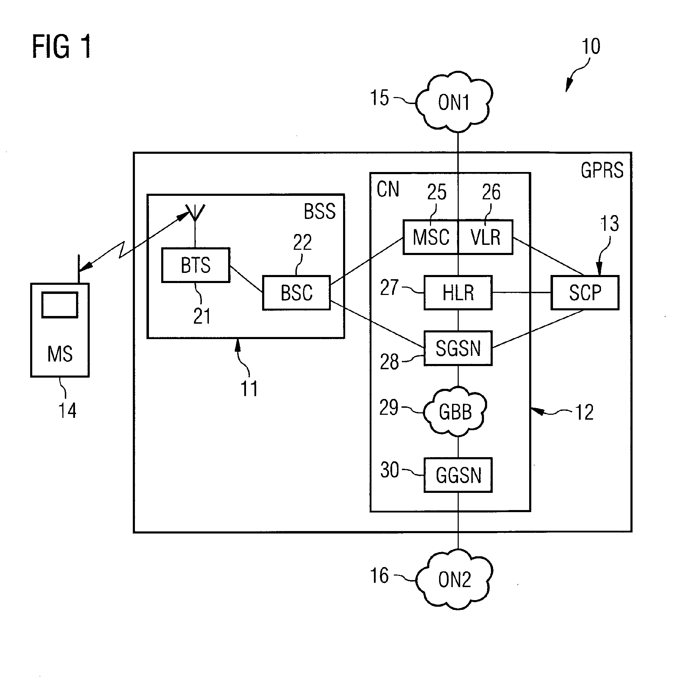

FIG. 1 shows a GSM (Global System Mobile) network 10. A description of the GSM network 10 is disclosed in "3rd Generation Partnership Project (3GPP)", http://www.3gpp.org/.

The GSM network 10 comprises an access network 11, a core network CN 12, and a service control point SCP 13. A plurality of mobile stations 14 is connected to the access network 11 via a wireless interface. The access network 11 is connected to the core network CN 12 whilst the core network CN 12 is connected to other network ON1 15, to other network ON2 16, and to the service control point SCP 13.

The access network 11 includes a base station subsystem BSS 20, which comprises a base transceiver station BTS 21, and a base station controller BSC 22 that is connected to the base transceiver stations BTS 21. The mobile stations MS 14 are connected with the base transceiver station BTS 21 via the wireless interface.

The core network CN 12 comprises a mobile switching centre MSC 25, visitor location register VLR 26, a home location register HLR 27, a serving GPRS (General Packet Radio Service) support node SGSN 28, an inter-operator backbone network GBB 29, and a gateway GPRS support node GGSN 30.

The mobile switching centre MSC 25 and the visitor location register VLR 26 are connected to the base station controller BSC 22, to the home location register HLR 27, the service control point SCP 13 and, to the other network ON1 15.

The home location register HLR 27 is connected to the service control point SCP 13, and to the serving GPRS support node SGSN 28 whilst the serving GPRS support node SGSN 28 is connected to the base station controller BSC 22, to the service control point SCP 13, and to the inter-operator backbone network GBB 29.

The inter-operator backbone network GBB 29 is connected to the gateway GPRS support node GGSN 30 whilst the gateway GPRS support node GGSN 30 is connected to the other network ON2 16.

In a generic sense, the GSM network 10 is a form of mobile radio telecommunication network. The core network CN 12 comprises a packet switched network. The packet switched network comprises computers, software and network cables. One form of the packet switched network is a GPRS (General Packet Radio Services) network. The serving GPRS (General Packet Radio Service) support node SGSN 28 is a form of a support node. The service control point SCP 13 forms part of an Intelligent Network.

The GSM network 10, as provided here, offers mobile telecommunication services, which includes voice and data services or packet data services. The serving GPRS support node SGSN 28 and the gateway GPRS support node GGSN 30 are components of a GPRS network.

A charging or costing of the packet data service may be arranged. A subscriber of the packet data service or user of the mobile station 14 is charged or asked for an amount of money for the use of the packet data service, as provided by resources of the GSM network 10. The packet data service may carry a voice call or a data transmission, such as Internet browsing. The charging of the packet data service may vary as the level or type of packet data service is changed or modified, such as change of quality of service. The charge for the packet data service is then allocated to a charging account of the subscriber or the user of the mobile station 14 that originated the call.

The charging account can be a pre-paid account or a post-paid account. In the pre-paid charging account, the user pays in advance for the packet data service. As the user makes use of the packet data service, the charges of the packet data service is deducted from a balance of the user's account until the balance is diminished to zero. Then the GSM network 10 blocks usage of the packet data service by the user until the account has been topped up. This has the advantage that an operator of the GSM network 10 does not need to trust the user to pay in arrears for the packet data service. In the post-paid charging account, the user pays for the packet data service after use of the packet data service. The GSM network 10 may block usage of the packet data service by the user does not pay for the consumed packet data service within a pre-determined period.

The GSM network 10 may also estimate the charge of the call as the call is in progress and periodically transmit the estimated charge to the user. The estimated charge may be displayed by the mobile station 14.

The mobile station MS 14, as provided here, comprises a mobile station subscriber or user, and a terminal that is capable of communicating with the GSM network 10. The terminal can be in the form of a mobile phone, or in the form of a computer that is connected to a mobile phone.

The access network 11, as provided here, provides a radio signal access for the core network CN 12, which is needed for wireless communication.

The base transceiver station BTS 21, as provided here, transmits signals from the mobile stations MS 14 to the core network CN 12, and sends signals from the core network 12 to the mobile station MS 14. The base transceivers station BTS 21 services the mobile stations MS 14 that are within its geographical service area or cell. The base station controller BSC 22, as provided here, controls the functions of the base transceiver station BTS 21.

The core network CN 12, as provided here, utilizes the access network 11 for wireless or radio communication. It provides circuit-switched transmission of voice signals and packet-switched transmission of data packet signals.

The mobile switching centre MSC 25, as provided here, provides transfers of the voice signals between the mobile station MS 14 and the other network ON1 15.

The other network ON1 15, as provided here, comprises a public switched telephone network.

The visitor-location-register VLR 26, as provided here, stores information about the mobile station MS 14, such as its location area identity.

The serving GPRS support node SGSN 28, as provided here, delivers data packet signals between the mobile stations MS 14 and the gateway GPRS support node GGSN 30. The serving GPRS support node SGSN 28 maintains a data structure of PDP (packet data protocol) context, which contains a subscriber's session information during an active session.

The gateway GPRS support node GGSN 30, as provided here, acts as an interface between the inter-operator backbone network GBB 29 and the other network ON2 16. The gateway GPRS support node GGSN 30 converts data packets from the serving GPRS support node SGSN 28 into an appropriate packet-data protocol (PDP) format and send them to the other network ON2 16.

The other network ON2 16, as provided here, comprises a data network, which may be in the form of an Internet Protocol IP network, a X.25 network, or an inter-PLMN (Public Land Mobile Network) backbone network. The internet protocol IP network may be in the form of the Internet or an intranet.

The inter-operator backbone network GBB 29, as provided here, act as a conduit between the serving GPRS support node SGSN 28 and the gateway GPRS support node GGSN 30. The inter-operator backbone network GBB 29 may be in the form of a local network, such as an Internet protocol IP network. It is possible to eliminate the inter-operator backbone network GBB 29 by implementing the functionality of the serving GPRS support node SGSN 28 and the gateway GPRS support node GGSN 30 in a single network node.

The home location-register HLR 27, as provided here, maintains a database of GPRS subscriber data. The GPRS subscriber data may include packet-data protocol PDP context subscriber record, a mobile subscriber international service digital network number MSISDN, routing information, or access point name (APN). The GPRS-subscriber data may also maintain information on Intelligent Network IN events relating to packet radio service, such as on prepaid calls.

The PDP context, as provided here, furnishes a record of an association between the mobile station MS 14 and the other network ON2 16. The PDP context may comprise information such as, routing, quality of service, security, and billing. Based on the PDP context, a telecommunication service provider may develop charging of a GPRS session between the mobile station MS 14 and the other network ON2 16.

The Intelligent Network IN events, as provided here, provide triggering information, which may comprise event types, criteria and conditions of the event types, and connection instructions to service control function SCF of Intelligent Network IN. The connection instructions may comprise address of the service control function SCF, service identity, and information regarding establishment of dialogue between the service control function SCF and a packet network node, or transmission of report to the service control function SCF.

The service control point SCP 13, as provided here, provides a service platform to which service control functions SCF can be loaded, and in which these service control functions SCF can be carried out.

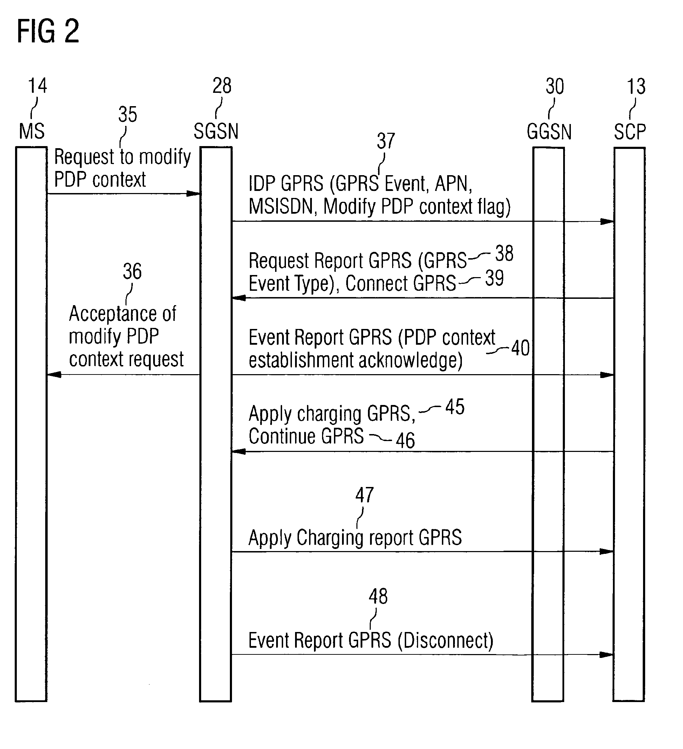

FIG. 2 illustrates an embodiment of a first method of charging of the GSM network 10 of FIG. 1.

FIG. 2 includes parts that are similar to the parts of FIG. 1. Similar parts are denoted with similar names. The description of FIG. 1 is incorporated here by way of reference.

FIG. 2 shows signalling or information flow IF of messages among parts of FIG. 1. The parts includes the mobile station MS 14, the serving GPRS support node SGSN 28, the gateway GPRS support node GGSN 30, and the service control point SCP 13. A description of information flow is shown in ETSI (European Telecommunications Standards Institute) technical specification, 3GPP TS 23.078, "Customised Applications for Mobile network Enhanced Logic (CAMEL)".

The embodiment of a first method shows an IDP GPRS message 37 in which the IDP GRPS message 37 comprises a Modify PDP context information element. Based on the Modify PDP context information element, a charging can be applied. This is different from an embodiment wherein this IDP GPRS message 37 is absent. The service control point SCP 13 is thus unaware of the request for modification of PDP context and the charging of a GPRS context does not comprehend the modification of PDP context.

The first method commences with a provision of a data-packet transfer session or GPRS session between the mobile station MS 14 and the core network CN 12. The mobile station MS 14 afterward sends a Request to modify PDP context message 35 to the serving GPRS support node SGSN 28. The Request to modify PDP context message 35 may be manually generated by a user of the mobile station MS 14 or may be automatically generated by the mobile station MS 14.

The Request to modify PDP context message 35 requests for a change in the PDP context of the data-packet transfer session. The Request to modify PDP context message 35 triggers a DP (detection point) at the serving GPRS support node SGSN 28.

The serving GPRS support node SGSN 28 then generates an Initial DP GPRS message 37 or IDP GPRS message 37, and sends the IDP GPRS message 37 to the service control point SCP 13.

The IDP GPRS message 37 includes a GPRS event-type information element, which indicates the GPRS event that generates the IDP GPRS message 37. Moreover, it also includes the APN information element, and the MSISDN information element, which indicates the MSISDN of the mobile station MS 14, as well as the Modify PDP context flag information-element that notifies of the service control point SCP 13 of the request to modify PDP context.

The service control point SCP 13 then performs a verification of the subscriber record. The verification may check a service key of the subscriber, and a subscriber credit status. If the verification by the service control point SCP 13 is satisfactory, the service control point SCP 13 afterwards transmits a Request Report GPRS message 38, and a Connect GPRS message 39 to the serving GPRS support node SGSN 28. The Request Report GPRS message 38 comprises a GPRS event-type information element.

The Request Report GPRS message 38 requests the serving GPRS support node SGSN 28 to monitor for an event and to send a notification back to the service control point SCP 13 when the event is detected. The event may be an establishment of modified PDP context. The Connect GPRS message 39 requests the serving GPRS support node SGSN 28 to modify the APN used when establishing the PDP context.

The serving GPRS support node SGSN 28 later sends an acceptance of modify PDP context 36 to the mobile station MS 14, and an Event Report GPRS message 40 to the service control point SCP 13. The Event Report GPRS message 40 comprises a PDP context establishment acknowledge information-element.

The Acceptance of modify PDP context message 36 informs the mobile station MS 14 that the request to change PDP context has been accepted. The Event Report GPRS message 40 acknowledges establishment of PDP context event as previously requested by the service control point SCP 13 in the Request Report GPRS message 38.

The service control point SCP 13 afterward transmits an Apply charging GPRS message 45 to the serving GPRS support node SGSN 28, and a Continue GPRS message 46 to the serving GPRS support node SGSN 28.

The Apply charging GPRS message 45 provides a charging mechanism for the modified PDP context, to the serving GPRS support node SGSN 28. The Continue GPRS message 46 requests the serving GPRS support node SGSN 28 to proceed with processing at the DP (detection point).

Then, the serving GPRS support node SGSN 28 transmits an Apply-charging report GPRS message 47 to the service control point SCP 13.

The Apply-Charging report GPRS message 47 reports to the service control point SCP 13 of the any information requested in the Apply Charging GPRS message 45.

The serving GPRS support node SGSN 28 afterward transmits an Event Report GPRS message 48, with a Disconnect information element, to the service control point SCP 13.

The Event Report GPRS message 48 informs the service control point SCP 13 of a PDP context disconnect or detachment. Then, the data-packet transfer session ends.

In a general sense, the Modify PDP context flag information-element is a form of a Modify PDP context information element.

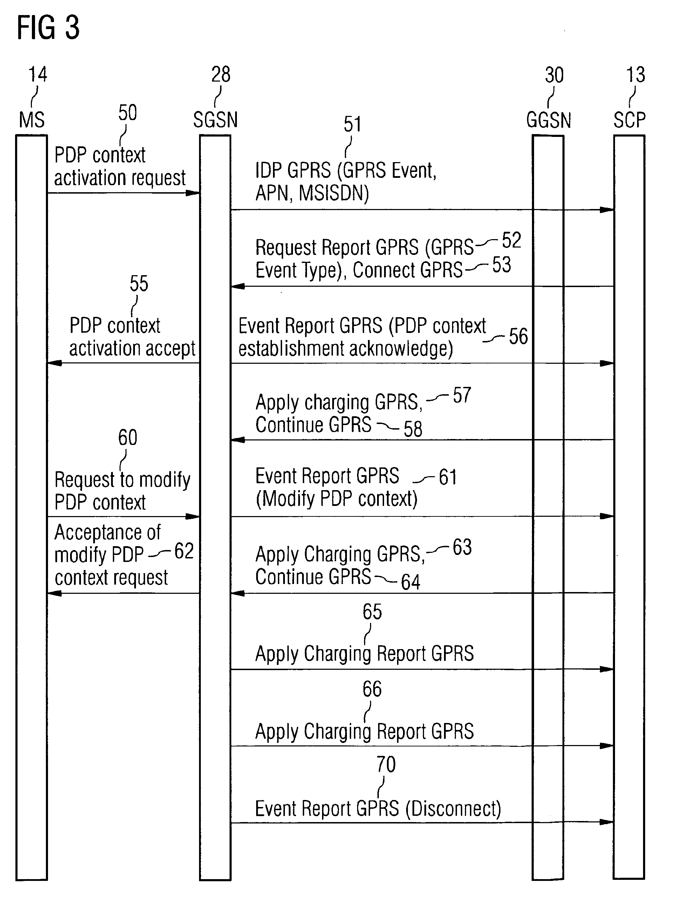

FIG. 3 illustrates an embodiment of a second method of charging in the GSM network 10 of FIG. 1. FIG. 3 comprises parts that are similar to the parts of FIG. 1 and 2. Similar parts are denoted with similar names. The description of FIG. 1 and 2 is incorporated here by way of reference.

FIG. 3 shows signalling or information flow IF of messages among parts of FIG. 1. The parts includes the mobile station MS 14, the serving GPRS support node SGSN 28, the gateway GPRS support node GGSN 30, and the service control point SCP 13.

FIG. 3 shows an Event Report GPRS message 61 with a modify PDP context information element as a DP (detection point) (modify PDP context defined as Event type and included as a modification of GPRS Event type information element). The Event Report GPRS message 61 is sent on receipt of a request to modify PDP context. Based on the Event Report GRPRS message 61, a charging for the modified PDP context can be applied. Thus, the Event Report GPRS message 61, as provided here, provides a charging mechanism for the modified PDP context.

In the embodiment, a GPRS session or a data-packet transfer session commences with a PDP context activation request 50 that is sent from the mobile station MS 14 to the serving GPRS support node SGSN 28.

The PDP context activation request 50 informs the serving GPRS support node SGSN 28 of the request to activate or initiate a PDP context.

After this, the serving GPRS support node SGSN 28 transmits an IDP GPRS message 51 to the service control point SCP 13. The IDP GPRS message 51 includes a GPRS event information element, an APN information element, and an MSISN information element.

The IDP GPRS message 51 requests instructions from the service control point SCP 13, and also provides the GPRS event that generates the IDP GPRS message 37, the MSISDN of the mobile station MS 14, and the APN of the mobile station MS 14 to the service control point SCP 13.

The service control point SCP 13 then verifies status of subscriber and service key of the subscriber. If the verification is satisfactory, the service control point SCP 13 responds by sending a Request Report GPRS message 52, and a Connect GPRS message 53 to the serving GPRS support node SGSN 28. The Request Report GPRS message 52 comprises a GPRS event-type information element.

The Request Report GPRS message 52 instructs the serving GPRS support node SGSN 28 to monitor for an event and to transmit a notification back to the service control point SCP 13 when the event occurs. The event may be an establishment of PDP context. The Connect GPRS message 53 requests the serving GPRS support node SGSN 28 to change the APN used when establishing the PDP context.

The serving GPRS support node SGSN 28 afterward sends a PDP context activation accept message 55 to the mobile station MS 14, and an Event Report GPRS message 56, which includes a PDP context establishment acknowledge information element to the service control point SCP 13.

The PDP context activation accept-message 55 feedbacks to the mobile station MS 14 that the request to change the PDP context has been accepted. The Event Report GPRS message 56 acknowledges establishment of the PDP context event as previously requested by the service control point SCP 13 in the Request Report GPRS message 52.

The service control point SCP 13 later transmits an Apply charging GPRS message 57, and a Continue GPRS message 58 to the serving GPRS support node SGSN 28.

The Apply charging GPRS message 57 arranges a charging mechanism to the serving GPRS support node SGSN 28 for the establishment of PDP context, as requested by the earlier IDP GPRS message 51. The Continue GPRS message 58 informs the serving GPRS support node SGSN 28 to continue with processing at the detection point DP.

Afterward, the mobile station mobile station MS 14 initials a request to modify the PDP context and sends a Request to modify PDP context message 60 to the serving GPRS support node SGSN 28.

The request initiates a charging in which the serving GPRS support node SGSN 28 transmits an Event Report GPRS message 61 that includes a Modify PDP context information element (Modify PDP context defined as Event type and included as a modification of GPRS Event type information element) to the service control point SCP 13.

The Event Report GPRS message 61 arranges a means to notify the service control point SCP 13 of the request to modify PDP context, in a manner that is shown in the Request to modify PDP context message 60.

The service control point SCP 13 reviews the request and afterward sends an Apply-Charging GPRS message 63, and a Continue GPRS message 64 to the serving GPRS support node SGSN 28.

The Apply-Charging GPRS message 63 arranges a charging mechanism for the modified PDP context, as notified by the Event Report GPRS message 61. The Continue GPRS message 64 informs the serving GPRS support node SGSN 28 to continue with processing at the detection point DP.

After this, the serving GPRS support node SGSN 28 sends an Acceptance of modify PDP context request message 62 to the mobile station MS 14.

The Acceptance of modify PDP context request message 62 provides a feedback regarding of the acceptance of modification request to the mobile station MB 14.

The serving GPRS support node SGSN 28 then transmits an Apply Charging Report GPRS message 65, and an Apply Charging Report GPRS message 66 to the service control point SCP 13.

The Apply Charging Report GPRS message 65 reports to the service control point SCP 13 regarding any information requested in the Apply Charging GPRS message 57. Similarly, the Apply Charging Report GPRS message 66 feedbacks to the service control point SCP 13 regarding any information requested in the Apply Charging GPRS message 63.

The GPRS session later ends with the serving GPRS support node SGSN 28 sending an Event Report GPRS message 70 that includes a Disconnect information element to the service control point SCP 13.

The Event Report GPRS message 70 informs the service control point SCP 13 of a request to disconnect or detach the PDP context.

For interpreting the embodiment of FIG. 3, one may also refer, by way of reference, to the explanations and remarks stated above with respect to FIGS. 1 and 2. The FIG. 3 comprises messages that are similar to the messages of FIG. 2 and parts that are similar to parts of FIG. 1.

### Reference numbers

- 10: GSM network
- 11: access network
- 12: core network CN
- 13: service control point SCP
- 14: mobile station
- 15: other network ON 1
- 16: other network ON 2
- 20: base station subsystem BSS
- 21: base transceiver station BTS
- 22: base station controller BSC
- 25: mobile switching centre MSC
- 26: visitor location register VLR
- 27: home location register HLR
- 28: serving GPRS support node SGSN
- 29: inter-operator backbone network GBB
- 30: gateway GPRS support node GGSN
- 35: Request to modify PDP context
- 36: Acceptance of modify PDP context request
- 37: IDP GPRS message
- 38: Request to Report GPRS message
- 39: Connect GPRS message
- 40: Event Report GPRS message
- 45: Apply charging GPRS message
- 46: Continue GPRS message
- 47: Apply charging GPRS message
- 48: Event Report GPRS message
- 50: PDP context activation request message
- 51: IDP GPRS message
- 52: Request Report GPRS message
- 53: Connect GPRS message
- 55: PDP context activation accept message
- 56: Event Report GPRS message
- 57: Apply charging GPRS message
- 58: Continue GPRS message
- 60: Request to modify PDP context
- 61: Event Report GPRS message

- 62: Acceptance of modify PDP context request
- 63: Apply charging GPRS message
- 64: Continue GPRS message
- 65: Apply charging GPRS message
- 66: Apply charging GPRS message
- 70: Event Report GPRS message

## Claims

1. A method of charging a packet data service in a mobile radio telecommunication network (10), the mobile radio telecommunication network (10) comprises a packet-switched network with at least one support node (28), and an Intelligent Network (13), the method comprises the step of:
receiving a request to modify a PDP (Packet Data Protocol) context by the support node (28), and
sending a message (37; 61) with a modify PDP context information element by the support node (28), to the Intelligent Network (13).

2. The method according to claim 1
**characterized in that** the mobile radio telecommunication network (10) is in the form of a Global System Mobile network (10).

3. The method according to claim 2
**characterized in that** the packet-switched network is in the form of a GPRS (General Packet Radio Services) network.

4. The method according to claim 3
**characterized in that** the support node (28) is in the form of a serving GPRS support node (28).

5. The method according to claim 4
**characterized in that** the Intelligent Network (13) comprises a service control point (13).

6. The method according to claim 5
**characterized in that** the support node (28) receives the request from the mobile station (14).

7. The method according to claim 6
**characterized in that** the request is manually generated by a user of the mobile station (14).

8. The method according to claim 6
**characterized in that** the request is automatically generated by the mobile station (14).

9. The method according to claim 6
**characterized in that** the message (37; 61) with a modify PDP context information element is part of an Initial DP GPRS message (37).

10. The method according to claim 6
**characterized in that** the message (37; 61) with a modify PDP context information element is part of an Event Report GPRS message (61).

11. The method according to claim 6
**characterized in that** the modify PDP context information element is part of a GPRS Event type.

12. The method according to claim 11
**characterized in that** the GPRS event type is part of an Event Report GPRS message (61).

13. The method according to claim 11 **characterized in that** the GPRS event type is part of a message.

14. The method according to claim 9 or 10 comprises the further step of sending an Apply charging GPRS message (45; 63) from the service control point (13) to the support node (28).

15. The method according to one of the claims 9 to 14 comprises the further step of sending an Apply-charging report GPRS message (47; 66) from the support node (28) to the service control point (13).

16. The method according to one of the claims 9 to 15 comprises the further step of sending an Acceptance of modify PDP context request message (36; 62) from the support node (28) to the mobile station (14).

17. A mobile radio telecommunication network (10) that comprises a support node (28), the support node (28) generates a message (37; 61) with a modify PDP context information element when triggered by a Request to Modify PDP context, and sends the message (37; 61) to an Intelligent Network (13).

18. The mobile radio telecommunication network (10) according to claim 17 **characterized in that** the mobile radio telecommunication network (10) is in the form of a Global System Mobile network (10).

19. The mobile radio telecommunication network (10) according to claim 18 **characterized in that** the support node (28) is in the form of a serving GPRS support node (28).
